# EUROPEAN PATENT APPLICATION

(11) **EP 2 093 742 A1**
(43) Date of publication of application: **26.08.2009**
(21) Application number: 08156886.7
(22) Date of filing: 26.05.2008
(51) Int. Cl.: G09B 19/00

(54) **Tool for playing, teaching, mental therapy and intellective refining in general, based on the visual recognition of various forms**

(30) Priority: 25.02.2008 IT MI20080294
(71) Applicant: Conz Lucini Passalacqua, Maria, 22070 Casnate con Bernate (CO) (IT); Frova, Lorenza, 22070 Casnate con Bernate (CO) (IT)
(72) Inventor: Conz Lucini Passalacqua, Maria, 22070 Casnate con Bernate (CO) (IT); Frova, Lorenza, 22070 Casnate con Bernate (CO) (IT)
(74) Representative: Mittler, Enrico

(57) **Abstract**

There is described a tool for playing, teaching, mental therapy and intellective refinement in general, including a set of stylized representations (1) of real forms which may be oriented at various angles for the visual recognition of the represented forms. (Fig. 1)

## Description

The present invention relates to a tool for playing, teaching, mental therapy and intellective refining in general, based on the visual recognition of various forms.

Many examples of visual recognition games are commercially known in the field of skill games and educational aids. These games activate and develop skills, which are poorly employed by most people, and can give us more precise perceptions of visual reality, even in its non-analytical dimension. As a matter of fact, the ability to recognize forms also develops visual synthesis skills, which are enjoyable and useful to train at any age.

The commercially available solutions provide for visual recognitions by various modes. Among the many examples, the well known games for children may be mentioned, which games consist in the recognition of simple and basic geometrical figures such as squares, rectangles, circles. Or otherwise in the recognition of highly stylized figures of the cartoon type, such as images of fruit, flowers and animals possibly associated to letters of the alphabet.

However, such solutions always consider a clarity and immediacy of recognition which do not imply an effort in researching the figure in our personal image data bank, Indeed, they usually include all of the information on the image, even if two-dimensional.

The intention is to activate this research effort in our personal life, and furthermore to increase the threshold of difficulty in the recognition, and create an association between form and term as a result of this effort,

It is the object of the present invention to therefore create a tool for playing, teaching, mental therapy and intellective refinement in general, which provides the visual recognition of real forms starting from hidden representations of the forms themselves.

According to the invention, such an object is achieved by a tool for playing, teaching, mental therapy and intellective refinement in general, characterized in that it includes a set of stylized representations of real forms which may be oriented at various angles for the visual recognition of the represented forms.

More specifically, such stylized representations are characterized by profiles similar to those of the real forms to recognize.

The representations may be made in the form of various kinds of items and materials, playing cards, cards, video images and so on.

These and other features of the present invention will become more apparent from the following detailed description of a practical embodiment thereof, shown by no way of limitation in the accompanying drawings, in which:
Figure 1 shows a set of randomly oriented stylized representations;
Figure 2 shows the same stylized representations oriented so as to ease visual recognition of the represented real forms;
Figure 3 shows a key legend that may be used in combination with the stylized representations such as those in Figure 1 for confirming the visual recognition and awarding a score during a playing, teaching or different activity;
Figure 4 shows a possible embodiment of a stylized representation on one side of a playing card.

With reference to the Figures, it should be noted that the various stylized representations may have different levels of interpretation difficulty, for instance six levels, from the simplest, i.e. level one, to the most difficult, i.e. level six. Each representation 1 is provided with a mark 2 to identify the anonymous representation 1 during use.

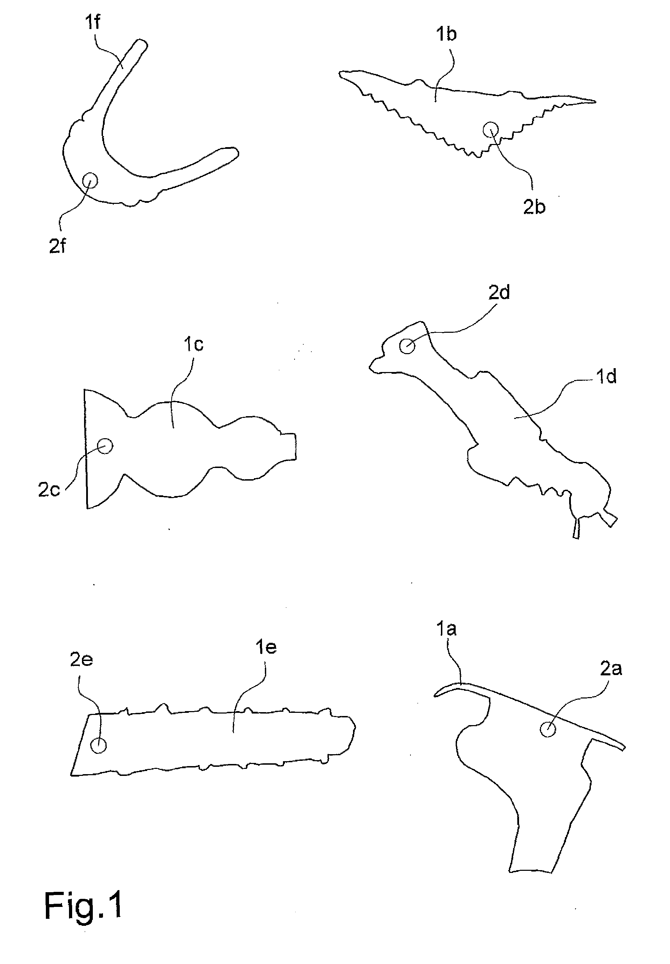

With reference to Figure 1, some stylized representations 1a-1f may be noted, for instance made of wood, arranged at a random angle which makes visual recognition of the represented forms difficult. Each representation features a respective mark 2a-2f which is used to confirm the correct visual recognition and to assign a score depending on the level of difficulty.

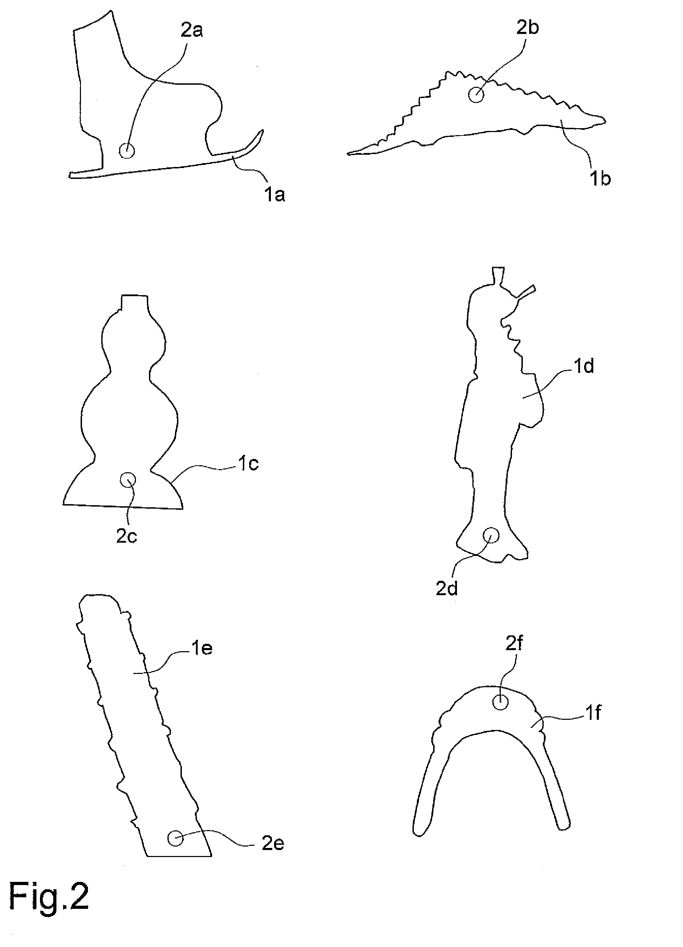

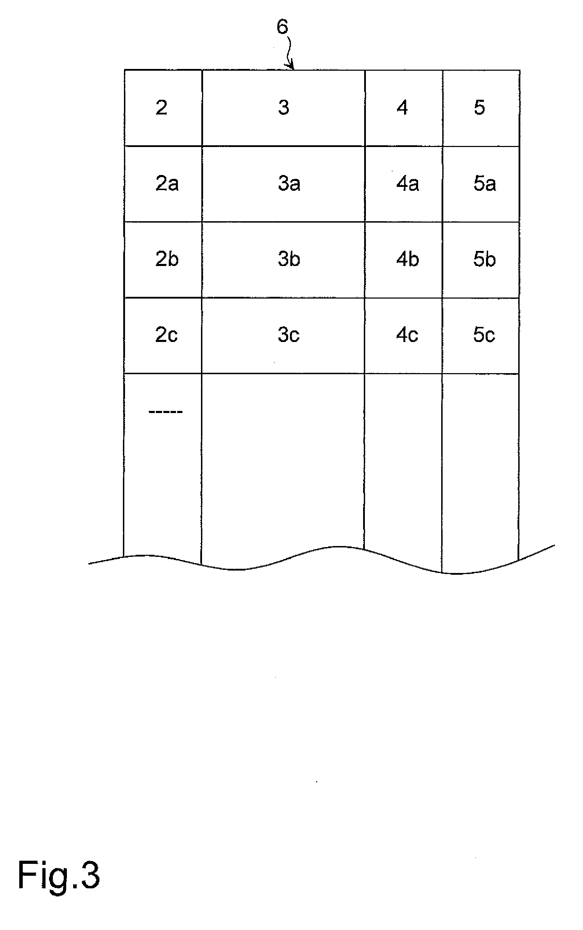

Figure 2 shows the same representations, this time according to an appropriate angle for the recognition of the represented forms. Therefore, it may more easily be understood that the stylized representation 1 a represents the profile of an ice skate. The confirmation of the correct visual recognition is obtained by comparing its mark 2a with the corresponding indication on the key legend 6 (Fig. 3), that also indicates the represented form 3a and the level of difficulty 4a from which a determined score 5a may result.

In the same manner the stylized representation 1b may be identified as representative of a form 3b, with a level of difficulty 4b, and so on for the other representations 1c-1f.

By way of example, six different objects have been chosen, each belonging to a different level of difficulty and respectively representing:
1a- an ice skate
1b- a dinosaur
1c- a chessboard bishop
1d- a geisha
1e- the tower of Pisa
1f- a judge's wig

Advantageously, the representations 1 are obtained from images of people, real or imaginary characters, animals, objects, regions, floral elements, works of art or architecture, sports activities and other,

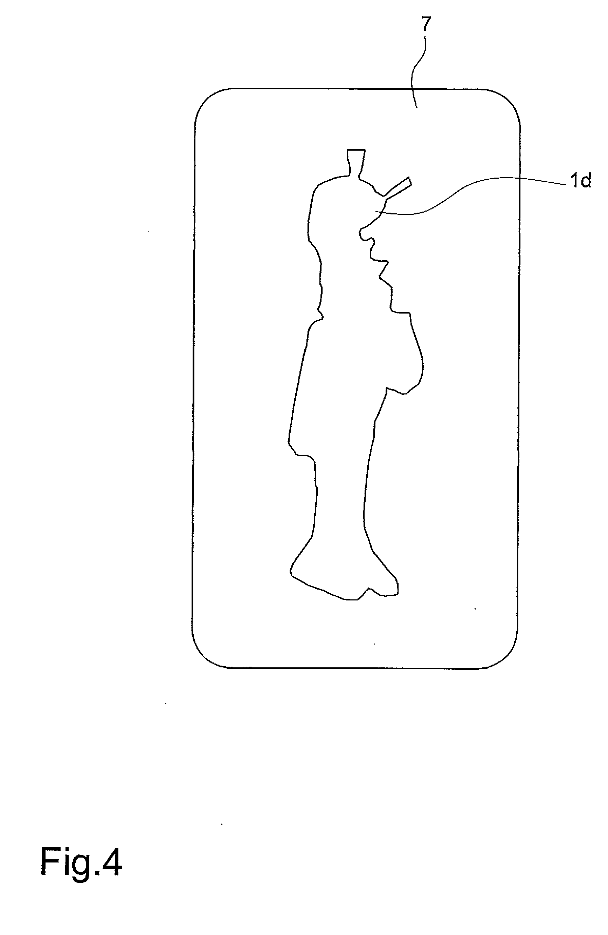

The various representations 1 may be made of wood or other material, or represented on playing cards 7, such as in Figure 4, or may consist of video images.

Among the many possible uses, a board game, a teaching tool, a television format, or an educational aid may be thought of.

## Claims

1. A tool for playing, teaching, mental therapy and intellective refinement in general, **characterized in that** it includes a set of stylized representations (1) of real formes which may be oriented at various angles for the visual recognition of the represented forms.

2. A tool according to claim 1, **characterized in that** said stylized representations (1) feature profiles similar to those of the represented forms.

3. A tool according to claim 1 or 2, **characterized in that** the representations (1) are obtained by images of people, real or imaginary characters, animals, objects, regions, floral elements, works of art or architecture, sports activities or other.

4. A tool according to claim 1, 2 or 3, **characterized in that** the representations (1) are provided with a mark (2) for the anonymous identification of the representation during use.

5. A tool according to any one of the claims from 1 to 4, **characterized in that** it includes a key legend (6) that indicates a represented form (3), an associated level of difficulty (4) and a score (5) associated thereto.

6. A tool according to any one of the preceding claims, **characterized in that** the representations (1) are reproduced in wooden cut-outs.

7. A tool according to any one of the preceding claims, **characterized in that** the representations are reproduced on playing cards (7).

8. A tool according to any one of the preceding claims, **characterized in that** the representations (1) are video images.
